# EUROPÄISCHE PATENTSCHRIFT

(11) **EP 3 047 991 B1**
(45) Veröffentlichungstag und Bekanntmachung des Hinweises auf die Patenterteilung: **31.05.2017**
(21) Anmeldenummer: 16150196.0
(22) Anmeldetag: 05.01.2016
(51) Int. Cl.: B60J 7/12

(54) **FALTVERDECK FÜR KRAFTFAHRZEUGE**
FOLDING TOP FOR MOTOR VEHICLES
TOIT ESCAMOTABLE POUR DES VEHICULES AUTOMOBILES

(30) Priorität: 23.01.2015 DE 102015201189
(43) Veröffentlichungstag der Anmeldung: 27.07.2016
(73) Patentinhaber: Magna Car Top Systems GmbH, 74321 Bietigheim-Bissingen (DE)
(72) Erfinder: KAILASAPATHI, Shankar, 70199 Stuttgart (DE)
(74) Vertreter: Rausch, Gabriele

(56) Entgegenhaltungen:
- EP-A1- 2 368 737
- EP-A2- 2 228 247
- DE-B3-102013 213 429
- DE-U1- 29 607 114

## Beschreibung

### Gebiet der Erfindung

Die vorliegende Erfindung betrifft ein Faltverdeck für Kraftfahrzeuge, wobei das Faltverdeck zwischen einer einen Fahrgastinnenraum überspannenden Schließstellung und einer in einen Aufbewahrungsraum abgelegten Offenstellung bringbar ist, umfassend ein Dachflächenbauteil, einen Verdeckbezug, und eine Halteleiste, wobei der Verdeckbezug an einem Ende mit der Halteleiste verbunden ist und wobei die Halteleiste quer zur Fahrzeuglängsrichtung angeordnet ist, und wobei die Halteleiste mit dem Dachflächenbauteil in Eingriff ist.

### Stand der Technik

Faltbare Verdecke besitzen an der Linie, der Dachspitze, die dem oberen Rand der Windschutzscheibe entspricht, eine Halterung, die vom Verdeckbezug umspannt und für die Verriegelung und Dichtung des Verdecks am Rahmen der Windschutzscheibe dienen.

Aus der DE102011056731A1 eine Lösung bekannt, bei der der Verdeckbezug um die Dachspitze bis zu einer Innenseite der Dachplatte herumgeführt und dort mit einer Halteleiste an einem Befestigungssteg der Dachplatte durch Clipsen befestigt ist. Der Befestigungssteg ist vorzugsweise einstückig mit der Dachplatte realisiert. Über eine so genannte Stoffhalteleiste, die im Querschnitt im Wesentlichen L-förmig ausgeführt ist, drückt einerseits die Halteleiste auf den Befestigungssteg und andererseits mit einem vorderen freien Ende direkt auf den um die Dachspitze herumgelegten Verdeckbezug. Die L-förmige Halteleiste ist an einer von einer Innenfläche des Flächenstücks ausgehenden Hülse, vorzugsweise durch eine Schraube, befestigt. Diese Lösung der Befestigung des Verdeckbezugs an der Dachspitze eines Fahrzeugs ist aufwändig in der Montage.

Aus der DE29607114 U1 ist eine Dachspitze bekannt, die aus einem Strangpressbauteil als Hohlprofil aufgebaut ist. Diese Spitze dient zur Aufnahmen des Verdeckstoffes und ist mit Aufnahmen zur Verbindung mit der Dachhaut versehen.

Aus der DE 9102147 U1 ist eine Haltvorrichtung für Verdeckstoff bekannt, die aus einer den Stoff aufnehmend Schlitz und einer pilzförmigen Befestigung besteht, die in ein Hohlprofil eingreift. Dokument DE 102013213429 bildet den nächstliegenden Stand der Technik und zeigt eine Halteleiste im Keilform. Der Stand der Technik zeigt dabei keine einfache Halteleiste, die den Verdeckbezug fasst und dabei einfach aber sicher in der Dachspitze verankert werden kann.

### Zusammenfassung der Erfindung

Es ist eine Aufgabe der Erfindung, ein Faltverdeck vorzusehen, bei dem die Montage zwischen einem Dachflächenbauteil und dem Verdeckbezug einfach und kostengünstig realisiert werden kann.

Die Lösung der Aufgabe erfolgt durch ein Faltverdeck für Kraftfahrzeuge, wobei das Faltverdeck zwischen einer einen Fahrgastinnenraum überspannenden Schließstellung und einer in einen Aufbewahrungsraum abgelegten Offenstellung bringbar ist, umfassend ein Dachflächenbauteil, einen Verdeckbezug, und eine Halteleiste, wobei der Verdeckbezug an einem Ende-Verdeckbezug mit der Halteleiste verbunden ist und wobei die Halteleiste quer zur Fahrzeuglängsrichtung angeordnet ist, wobei die Halteleiste mit dem Dachflächenbauteil in Eingriff ist, wobei die Halteleiste in einem ersten Endbereich eine Geometrie aufweist, die im Dachflächenbauteil eingehakt ist, wobei die Halteleiste einen dem ersten Endbereich gegenüberliegenden zweiten Endbereich aufweist, dessen Geometrie an dem Dachflächenbauteil in X- und Z-Richtung anliegt.

Diese Anordnung gewährleitet, dass eine sichere definierte Verbindung zwischen dem Verdeckbezug und dem Dachflächenbauteil hergestellt wird, da die mit dem Verdeckbezug verbundene Halteleiste im ersten Endbereich im Dachflächenbauteil eingehakt ist und sich im zweiten Endbereich am Dachflächenbauteil abstützt.

Unter Dachflächenbauteil wird jedes Dachteil verstanden, welches gegen das Fahrzeug, vorzugsweise den Windschutzscheibenrahmen, verriegelt bzw. entriegelt werden kann. In einer bevorzugten Ausführungsform kann es die Dachkappe sein.

Als Faltverdeck wird jedes sich öffnende Dach verstanden, welches durch Falten des Dachteils oder des Verdeckbezugs zumindest teilweise den Innenraum eines Kraftfahrzeugs freigeben kann.

Unter Aufbewahrungsraum bei abgelegter Offenstellung wird jeder Raum verstanden in dem das gefaltete Dach abgelegt sein kann, wobei jede dem Fachmann aus dem Stand der Technik bekannte Ablageposition für Faltdächer eingeschlossen ist.

Weiterbildungen der Erfindung sind in den abhängigen Ansprüchen, der Beschreibung sowie den beigefügten Zeichnungen angegeben.

Das Dachflächenbauteil weist in einer erfindungsgemäßen Ausführungsform zumindest eine Ausnehmung zur Aufnahme der Geometrie des ersten Endbereichs der Halteleiste auf.

Die Geometrie des ersten Endbereichs der Halteleiste wird durch die Ausnehmung des Dachflächenbauteils durch gesteckt und weist dabei zumindest ein Element auf, welches ein Einhaken im Dachflächenbauteil ermöglicht.

Die Halteleiste weist in einer bevorzugten Ausführungsform eine Vielzahl von Geometrien zum Einhaken im ersten Endbereich auf, wodurch eine zuverlässige Verbindung mit dem Dachflächenbauteil erreicht wird.

In einer bevorzugten Ausführungsform ist die Halteleiste an den Verdeckbezug angenäht. Im Stand der Technik wird die Halteleiste mittels eines Doppelklebebandes mit dem Verdeckbezug verbunden. Diese Verbindung ist jedoch nicht serienprozesssicher und kann sich unter Umständen ungewollt lösen.

Alternativ ist jedoch auch denkbar, dass die Halteleiste durch beispielsweise Nieten oder Schweißen mit dem Verdeckbezug dauerhaft verbunden wird.

Die Halteleiste erstreckt sich dabei im Wesentlichen quer zur Fahrzeuglängsrichtung.

Die Halteleiste ist in einer bevorzugten Ausführungsform aus Kunststoff hergestellt, beispielsweise durch ein Spritzgussverfahren. Die Halteleiste kann alternativ auch metallisch, beispielsweise als Aluminium-Legierung, aus Zink im Zinkdruckgussverfahren, oder Stahl hergestellt sein.

Der Verdeckbezug ist erfindungsgemäß an der Unterseite der Halteleiste angenäht. Da der Verdeckbezug sich um das vordere Ende des Dachflächenbauteils spannt ist eine besonders gute Stoffspannung des Verdeckbezugs realisierbar.

Die Halteleiste ist in einer bevorzugten Ausführungsform lösbar mit dem Dachflächenbauteil verbunden.

Die Geometrie des ersten Endbereichs der Halteleiste weist einen Verankerungsabschnitt auf. Dieser Verankerungsabschnitt hakt im Dachflächenbauteil ein und verhindert, dass sich die Halteleiste vom Dachflächenbauteil lösen kann. Der Verankerungsabschnitt ist im Querschnitt bevorzugt pilz- oder ankerförmig ausgebildet.

Der Verankerungsabschnitt des ersten Endbereichs der Halteleiste ist bevorzugt elastisch ausgebildet. Die pilz- oder ankerförmige Ausbildung kann dadurch durch die Ausnehmung des Dachflächenbauteils durch gesteckt werden, wodurch die Schenkel des Verankerungsabschnitts elastisch verformt werden. Wenn der Verankerungsabschnitt durch die Ausnehmung des Dachflächenbauteils durch gesteckt ist spreizen die Schenkel des Verankerungsabschnitts wieder auseinander wodurch die Halteleiste in der Ausnehmung gehalten wird.

Der Verankerungsabschnitt des ersten Endbereichs der Halteleiste ist in einer bevorzugten Ausführungsform im Wesentlichen in Z-Richtung nach oben ausgebildet.

Die Halteleiste kann dadurch nicht nach unten fallen und ist so verliersicher mit dem Dachflächenbauteil verbunden. Die Halteleiste wird auch durch die Stoffspannung des Verdeckbezugs gegen das Dachflächenbauteil gedrückt.

Eine Dachhalteleiste, die mit dem Dachflächenbauteil verschraubbar ist drückt die Halteleiste ebenfalls gegen das Dachflächenbauteil und dient als zusätzliche Sicherung, dass die Halteleiste in Position gehalten wird.

Die Geometrie im zweiten Endbereich der Halteleiste ist als Nase ausgebildet. Die Nase ist dabei in einer bevorzugten Ausführungsform das abschließende Element der Halteleiste und sichert die Halteleiste gegen ein Verschieben in X-Richtung.

Das Dachflächenbauteil weist im Bereich Nase der Halteleiste eine Geometrie auf, die zur Aufnahme der Nase der Halteleiste geeignet ist.

Die Geometrie im zweiten Endbereich der Halteleiste weist eine Neigung auf, welche der Neigung des Dachflächenbauteils in diesem Abschnitt entspricht. Die Neigung ist angrenzend an die Nase der Halteleiste ausgebildet und dient zur Sicherung der Position der Halteleiste in Z-Richtung.

In einer besonders bevorzugten Ausführungsform ist der zweite Endbereich der Halteleiste im verbauten Zustand in Fahrzeuglängsrichtung vorne angeordnet.

Die Nase der Halteleiste drückt in die dafür vorgesehene Aufnahme des Dachflächenbauteils und verhindert dass die Halteleiste aufgrund der Stoffspannung des Verdeckbezugs in X-Richtung weiter verschoben werden kann.

### Kurzbeschreibung der Zeichnungen

Die Erfindung wird im Folgenden beispielhaft unter Bezugnahme auf die Zeichnungen beschrieben.
- Fig. 1: zeigt eine Seitenansicht einer erfindungsgemäßen Halteleiste.
- Fig. 2: zeigt einen Bereich des erfindungsgemäßen Faltverdecks in Seitenansicht.
- Fig. 3: zeigt eine perspektivische Ansicht der erfindungsgemäßen Halteleiste.

### Detaillierte Beschreibung der Erfindung

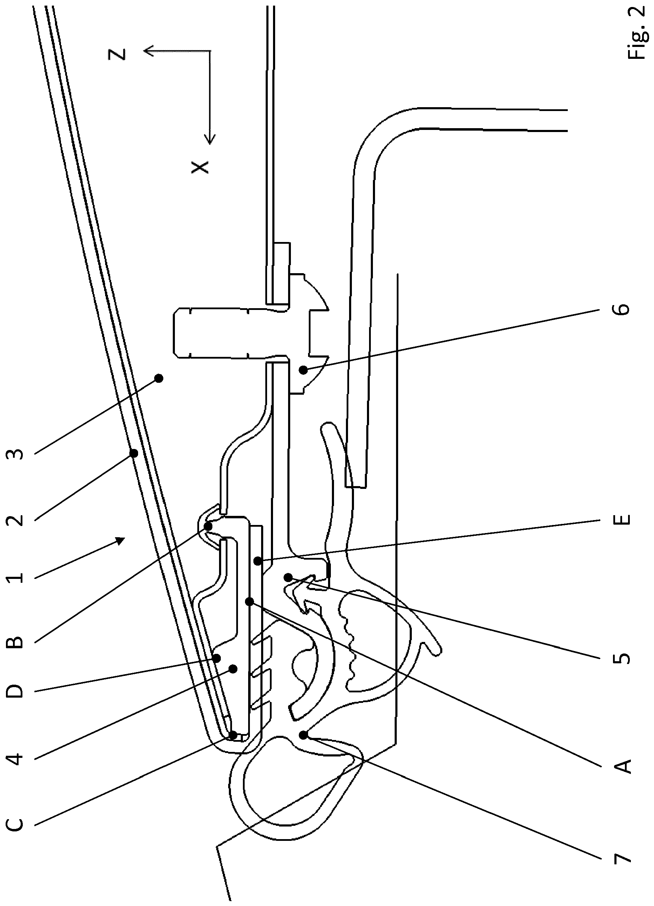

Fig. 2 zeigt einen Bereich des erfindungsgemäßen Faltverdecks 1, der einen Querschnitt durch die Dachspitze mit Verdeckbefestigung und Dichtung darstellt. Das Faltverdeck 1 weist einen Verdeckbezug 2 auf, wobei das Ende E des Verdeckbezugs an der Unterseite A einer Halteleiste 4 mit der Halteleiste 4 selbst verbunden ist. Dabei wird das Ende E des Verdeckbezugs bevorzugt an die Halteleiste 4 angenäht. Die Halteleiste 4 ist in einem Dachflächenbauteil 3 eingehakt. Der Verankerungsabschnitt B der Halteleiste 4 ist in einer bevorzugten Ausführungsform nach oben erstreckend ausgebildet. Der Verankerungsabschnitt B ist vorzugsweise elastisch ausgebildet, wodurch der Verankerungsabschnitt B leichter durch eine hierfür vorgesehene Ausnehmung im Dachflächenbauteil 3 durchsteckbar ist. Die pilz- oder ankerförmige Ausbildung des Verankerungsabschnitts B kann sich nach dem Durchstecken durch die Ausnehmung des Dachflächenbauteils 3 wieder spreizen, wodurch die Halteleiste 4 verliersicher aber lösbar mit dem Dachflächenbauteil 3 verbunden ist. Gerade durch die Vorinstallation der Halteleiste am Dachflächenbauteil besteht der Vorteil der Konstruktion. In der Montage ist damit die Halteleiste schon sicher befestigt und der Verdeckbezug kann anschließend über der Halteleiste gespannt und definiert befestigt werden.

Die Halteleiste 4 weist eine Nase C auf, wobei das Dachflächenbauteil 3 in diesem Bereich eine Ausbildung zur Aufnahme der Nase C aufweist. Dadurch wird verhindert, dass die Halteleiste 4 durch die Verdeckbezugspannung, welche bei geschlossenem Faltverdeck 1 erreicht wird, nach vorne in X-Richtung verschoben werden kann. Die Halteleiste 4 weist weiter eine Neigung D auf, welche der Neigung des Dachflächenbauteils 3 in diesem Bereich entspricht. Die Halteleiste 4 wird in diesem Bereich aufgrund der Verdeckbezugspannung gegen das Dachflächenbauteil 3 gedrückt, wodurch eine weitere Verschiebung in Z-Richtung verhindert wird. Eine Dachhalteleiste 5 ist mittels einer Verschraubung 6 mit dem Dachflächenbauteil 3 verbunden. Die Dachhalteleiste 5 drückt die elastische Halteleiste 4 gegen das Dachflächenbauteil 3 und dient als zusätzliche Sicherung, durch die die Halteleiste 4 in Position gehalten wird. Die Dachhalteleiste 5 dient auch zur Aufnahme einer Dichtung 7, die verhindert, dass Schmutz oder Wasser in den Fahrzeuginnenraum eindringen kann.

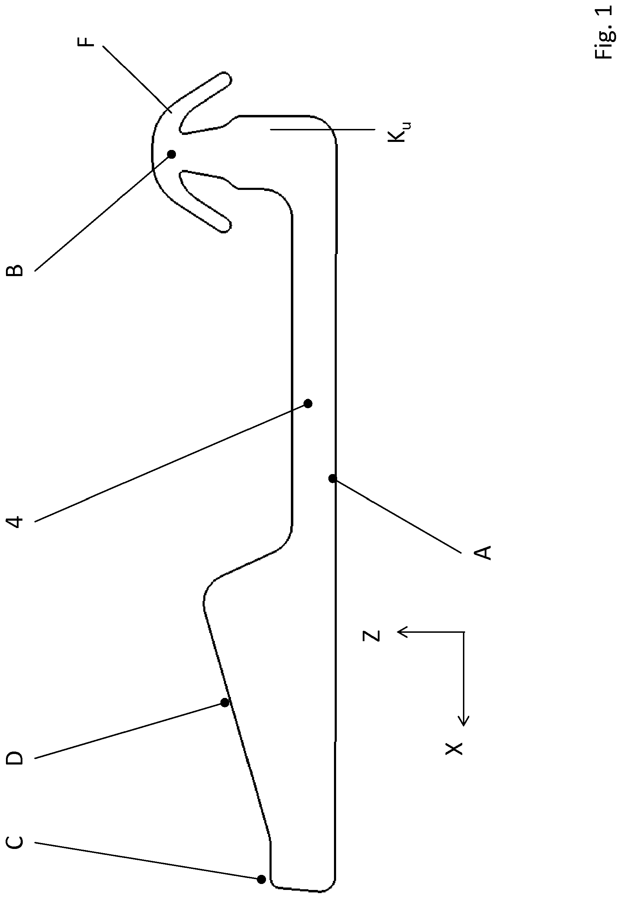

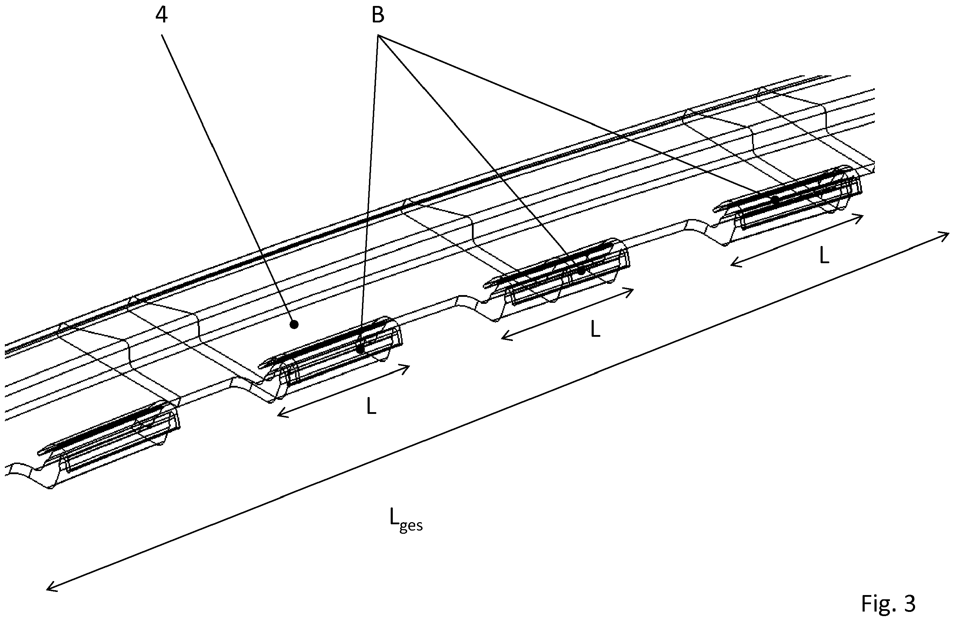

In Fig. 1 ist die erfindungsgemäße Halteleiste 4 in Seitenansicht dargestellt. Die Halteleiste 4 weist einen ersten Endbereich zur Fahrzeuginnenseite hin und einem dem ersten Endbereich gegenüberliegenden zweiten Endbereich zur Fahrzeugspitze hin, auf. Der erste Endbereich weist eine Geometrie B auf, welche als Verankerungsabschnitt ausgebildet ist. Der Verankerungsabschnitt B ist in einer bevorzugen Ausführungsform im Querschnitt pilz- oder ankerförmig ausgebildet.
Der Querschnitt kann für zwei unterschiedliche Ausführungsformen dienen, einer Form, in dem der Verankerungsabschnitt B ein zylindrischer Köper ist, oder einen Ausführungsform nach Fig. 3, in der der Verankerungsabschnitt B eine Befestigungsleiste ist.

Es sind flügelförmige Strukturen F vorhanden, die sich um einen zylindrischen Körper um 360° erstrecken. Alternativ können auch einzelne getrennte Flügel F verwendet werden. Der zylindrische Körper K ist so ausgebildet, das es in seinem unteren Bereich Kᵤ dem Durchmesser der Öffnung im Dachflächenbauteil 3 entspricht. Der zylindrische Körper verjüngt sich zur Spitze hin, um ein einfacheres Einführen mit an den Körper angepressten Flügeln F zu erlauben. Die Halteleiste 4 weist im zweiten Endbereich eine Geometrie C und D auf, wobei Geometrie C als Nase ausgebildet ist und ist in einer bevorzugten Ausführungsform das abschließende Element der Halteleiste 4. Die Nase C greift in das Dachflächenbauteil ein und stellt eine weiter definierte Position der Dachhalteleiste gegenüber dem Dachflächenbauteil dar. Angrenzend an die Nase C ist Geometrie D vorgesehen, die als Neigung ausgebildet ist. Sie dient zur Anlage des Verdeckbezugs. Die Halteleiste 4 weist weiter eine Geometrie A auf welche die Unterseite der Halteleiste 4 im verbauten Zustand darstellt.

In Fig. 3 ist eine weitere Ausführungsform der erfindungsgemäßen Halteleiste 4 in perspektivischer Ansicht dargestellt.
Dabei entspricht die Halteleiste im Schnitt der Figur 1, aber es gibt keine zylindrischen Körper sondern die pilzförmigen Verbindungsstrukturen erstrecken sich jeweils entlang einer Länge L entlang der Oberkante der Windschutzscheibe. Die Flügel sind dabei entlang der Längen L beidseitig angeordnet.

Die Halteleiste 4 weist eine Vielzahl von Verankerungsabschnitten B auf, welche durch entsprechende langgestreckte Ausnehmungen im Dachflächenbauteil 3 durchsteckbar sind. Dabei weisen die Verbindungsstrukturen einen Körper au, der wie im Schnitt gezeigt eine Verjüngung zur Spitze hin erfährt. Die Längen L der einzelnen Verankerungsabschnitte B umfassen dabei mindestens 40% der gesamten Länge L_{ges} der Halteleiste 4. Die Verbindungen entlang einer großen Länge verbessert die Stabilität der Anordnung und erleichtert die Montage weiter, da nur noch wenige Verankerungsabschnitte B verbunden werden.

### Bezugszeichenliste

- 1: Faltverdeck
- 2: Verdeckbezug
- 3: Dachflächenbauteil
- 4: Halteleiste
- 5: Dachhalteleiste
- 6: Verschraubung
- 7: Dichtung

- A: Unterseite
- B: Verankerungsabschnitt
- C: Nase
- D: Neigung
- E: Ende des Verdeckbezugs
- F: Flügel
- L_{ges}: gesamte Länge
- L: Länge der Verbindungsabschnitte
- K: Körper
- Kᵤ: unterer Bereich

## Patentansprüche

1. Faltverdeck (1) für Kraftfahrzeuge, wobei das Faltverdeck (1) zwischen einer einen Fahrgastinnenraum überspannenden Schließstellung und einer in einen Aufbewahrungsraum abgelegten Offenstellung bringbar ist, umfassend ein Dachflächenbauteil (3), einen Verdeckbezug (2), und eine Halteleiste (4), wobei der Verdeckbezug (2) an einem Ende (E) des Verdeckbezugs mit der Halteleiste (4) verbunden ist und wobei die Halteleiste (4) quer zur Fahrzeuglängsrichtung angeordnet ist, wobei die Halteleiste (4) mit dem Dachflächenbauteil (3) in Eingriff ist und einen dem ersten Endbereich gegenüberliegenden zweiten Endbereich aufweist, dessen Geometrie (C, D) an dem Dachflächenbauteil (3) in X- und Z-Richtung anliegt, **dadurch gekennzeichnet, dass** die Halteleiste (4) in einem ersten Endbereich eine Geometrie (B) aufweist, die eine Vielzahl von Verankerungsabschnitten aufweist, und die sich entlang einer Länge (L) entlang der Fahrzeugquerachse erstreckt, und die in langgestreckte Ausnehmungen im Dachflächenbauteil (3) eingehakt ist..

2. Faltverdeck (1) für Kraftfahrzeuge nach Anspruch 1,
**dadurch gekennzeichnet, dass** das Dachflächenbauteil (3) zumindest eine Ausnehmung zur Aufnahme der Geometrie (B) des ersten Endbereichs der Halteleiste (4) aufweist.

3. Faltverdeck (1) für Kraftfahrzeuge nach Anspruch 1,
**dadurch gekennzeichnet, dass** die Halteleiste (4) an den Verdeckbezug (2) angenäht ist.

4. Faltverdeck (1) für Kraftfahrzeuge nach Anspruch 3,
**dadurch gekennzeichnet, dass** der Verdeckbezug an der Unterseite (A) der Halteleiste (4) angenäht ist.

5. Faltverdeck (1) für Kraftfahrzeuge nach zumindest einem der vorhergehenden Ansprüche,
**dadurch gekennzeichnet, dass** die Halteleiste (4) lösbar mit dem Dachflächenbauteil (3) verbunden ist.

6. Faltverdeck (1) für Kraftfahrzeuge nach zumindest einem der vorhergehenden Ansprüche,
**dadurch gekennzeichnet, dass** die Geometrie im ersten Endbereich der Halteleiste (4) einen Verankerungsabschnitt (B) aufweist.

7. Faltverdeck (1) für Kraftfahrzeuge nach Anspruch 6,
**dadurch gekennzeichnet, dass** der Verankerungsabschnitt (B) des ersten Endbereichs der Halteleiste (4) elastisch ausgebildet ist.

8. Faltverdeck (1) für Kraftfahrzeuge nach Anspruch 6,
**dadurch gekennzeichnet, dass** der Verankerungsabschnitt (B) des ersten Endbereichs der Halteleiste (4) im Wesentlichen in Z-Richtung nach oben ausgebildet ist.

9. Faltverdeck (1) für Kraftfahrzeuge nach zumindest einem der vorhergehenden Ansprüche,
**dadurch gekennzeichnet, dass** die Geometrie im zweiten Endbereich der Halteleiste eine Nase (C) ausbildet.

10. Faltverdeck (1) für Kraftfahrzeuge nach zumindest einem der vorhergehenden Ansprüche,
**dadurch gekennzeichnet, dass** die Geometrie im zweiten Endbereich der Halteleiste eine Neigung (D) aufweist, welche der Neigung des Dachflächenbauteils (3) in diesem Abschnitt entspricht.

11. Faltverdeck (1) für Kraftfahrzeuge nach zumindest einem der vorhergehenden Ansprüche,
**dadurch gekennzeichnet, dass** der zweite Endbereich der Halteleiste (4) im verbauten Zustand in Fahrzeuglängsrichtung vorne angeordnet ist.

12. Faltverdeck (1) für Kraftfahrzeuge nach zumindest einem der vorhergehenden Ansprüche,
**dadurch gekennzeichnet, dass** die Längen (L) mindestens 40% der Gesamtlänge (L_{ges}) ausmachen.

## Claims

1. Folding top (1) for motor vehicles, wherein the folding top (1) can be brought between a closed position spanning a passenger compartment interior and an open position deposited into a storage space, comprising a roof surface component (3), a folding-top cloth (2) and a retaining strip (4), wherein the folding-top cloth (2) is connected at one end (E) of the folding-top cloth to the retaining strip (4), and wherein the retaining strip (4) is arranged transversely with respect to the longitudinal direction of the vehicle, wherein the retaining strip (4) is in engagement with the roof surface component (3) and has a second end region which lies opposite the first end region and the geometry (C, D) of which lies against the roof surface component (3) in the X and Z direction, **characterized in that** the retaining strip (4) in a first end region has a geometry (B) which has a multiplicity of anchoring portions, and which extends along a length (L) along the transverse axis of the vehicle and which is hooked into elongate recesses in the roof surface component (3).

2. Folding top (1) for motor vehicles according to Claim 1, **characterized in that** the roof surface component (3) has at least one recess for receiving the geometry (B) of the first end region of the retaining strip (4).

3. Folding top (1) for motor vehicles according to Claim 1, **characterized in that** the retaining strip (4) is sewn onto the folding-top cloth (2).

4. Folding top (1) for motor vehicles according to Claim 3, **characterized in that** the folding-top cloth is sewn to the lower side (A) of the retaining strip (4).

5. Folding top (1) for motor vehicles according to at least one of the preceding claims, **characterized in that** the retaining strip (4) is connected releasably to the roof surface component (3).

6. Folding top (1) for motor vehicles according to at least one of the preceding claims, **characterized in that** the geometry of the first end region of the retaining strip (4) has an anchoring portion (B).

7. Folding top (1) for motor vehicles according to Claim 6, **characterized in that** the anchoring portion (B) of the first end region of the retaining strip (4) is of elastic design.

8. Folding top (1) for motor vehicles according to Claim 6, **characterized in that** the anchoring portion (B) of the first end region of the retaining strip (4) is formed upwards substantially in the Z direction.

9. Folding top (1) for motor vehicles according to at least one of the preceding claims, **characterized in that** the geometry of the second end region of the retaining strip forms a lug (C).

10. Folding top (1) for motor vehicles according to at least one of the preceding claims, **characterized in that** the geometry of the second end region of the retaining strip has an inclination (D) which corresponds to the inclination of the roof surface component (3) in this portion.

11. Folding top (1) for motor vehicles according to at least one of the preceding claims, **characterized in that** the second end region of the retaining strip (4) in the installed state is arranged at the front in the longitudinal direction of the vehicle.

12. Folding top (1) for motor vehicles according to at least one of the preceding claims, **characterized in that** the lengths (L) make up at least 40% of the overall length (L_{ges}).

## Revendications

1. Toit escamotable (1) pour des véhicules automobiles, dans lequel le toit escamotable (1) peut être amené entre une position de fermeture recouvrant un habitacle des passagers et une position d'ouverture de dépôt dans un espace de rangement, comprenant un composant de surface de toit (3), un revêtement de toit escamotable (2) et une baguette de retenue (4), le revêtement de toit escamotable (2) étant connecté à une extrémité (E) du revêtement de toit escamotable à la baguette de retenue (4) et la baguette de retenue (4) étant disposée transversalement à la direction longitudinale du véhicule, la baguette de retenue (4) étant en prise avec le composant de surface de toit (3) et présentant une deuxième région d'extrémité opposée à la première région d'extrémité, dont la géométrie (C, D) s'applique dans la direction X et dans la direction Z contre le composant de surface de toit (3), **caractérisé en ce que** la baguette de retenue (4) présente une géométrie (B) dans une première région d'extrémité qui présente une pluralité de portions d'ancrage et qui s'étend le long d'une longueur (L) le long de l'axe transversal du véhicule et qui est accrochée dans des évidements allongés dans le composant de surface de toit (3).

2. Toit escamotable (1) pour des véhicules automobiles selon la revendication 1,
**caractérisé en ce que** le composant de surface de toit (3) présente au moins un évidement pour recevoir la géométrie (B) de la première région d'extrémité de la bague de retenue (4).

3. Toit escamotable (1) pour des véhicules automobiles selon la revendication 1,
**caractérisé en ce que** la baguette de retenue (4) est cousue au revêtement de toit escamotable (2).

4. Toit escamotable (1) pour des véhicules automobiles selon la revendication 3,
**caractérisé en ce que** le revêtement de toit escamotable est cousu au côté inférieur (A) de la baguette de retenue (4).

5. Toit escamotable (1) pour des véhicules automobiles selon au moins l'une quelconque des revendications précédentes,
**caractérisé en ce que** la baguette de retenue (4) est connectée de manière amovible au composant de surface de toit (3).

6. Toit escamotable (1) pour des véhicules automobiles selon au moins l'une quelconque des revendications précédentes,
**caractérisé en ce que** la géométrie dans la première région d'extrémité de la baguette de retenue (4) présente une portion d'ancrage (B).

7. Toit escamotable (1) pour des véhicules automobiles selon la revendication 6,
**caractérisé en ce que** la portion d'ancrage (B) de la première région d'extrémité de la bague de retenue (4) est réalisée sous forme élastique.

8. Toit escamotable (1) pour véhicules automobiles selon la revendication 6,
**caractérisé en ce que** la portion d'ancrage (B) de la première région d'extrémité de la baguette de retenue (4) est réalisée essentiellement dans la direction Z vers le haut.

9. Toit escamotable (1) pour des véhicules automobiles selon au moins l'une quelconque des revendications précédentes,
**caractérisé en ce que** la géométrie dans la deuxième région d'extrémité de la bague de retenue constitue un nez (C).

10. Toit escamotable (1) pour des véhicules automobiles selon au moins l'une quelconque des revendications précédentes,
**caractérisé en ce que** la géométrie dans la deuxième région d'extrémité de la bague de retenue présente une inclinaison (D) qui correspond à l'inclinaison du composant de surface de toit (3) dans cette portion.

11. Toit escamotable (1) pour des véhicules automobiles selon au moins l'une quelconque des revendications précédentes,
**caractérisé en ce que** la deuxième région d'extrémité de la bague de retenue (4) est disposée vers l'avant dans l'état monté dans la direction longitudinale du véhicule.

12. Toit escamotable (1) pour des véhicules automobiles selon au moins l'une quelconque des revendications précédentes,
**caractérisé en ce que** les longueurs (L) représentent au moins 40 % de la longueur totale (L_{ges}).
